(19) **Europäisches Patentamt European Patent Office Office européen des brevets**

(11) **EP 2 197 641 B1**

(12) **EUROPEAN PATENT SPECIFICATION**

(45) Date of publication and mention
of the grant of the patent:
**23.02.2011 Bulletin 2011/08**

(51) Int Cl.:
**B28B 11/24** *(2006.01)* **F26B 3/347** *(2006.01)*
**C04B 40/02** *(2006.01)*

(21) Application number: **08806955.4**

(22) Date of filing: **01.09.2008**

(86) International application number:
**PCT/IB2008/002256**

(87) International publication number:
**WO 2009/027813 (05.03.2009 Gazette 2009/10)**

(54) **PROCESS FOR CURING AND DRYING CONCRETE**

VERFAHREN ZUR AUSHÄRTUNG UND TROCKNUNG VON BETON

PROCÉDÉ DE DURCISSEMENT ET DE SÉCHAGE DU BÉTON

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.08.2007 DK 200701249**

(43) Date of publication of application:
**23.06.2010 Bulletin 2010/25**

(73) Proprietor: **Danish Concrete Technology Holding Aps**
**1362 Copenhagen K (DK)**

(72) Inventors:
• **HOLM, Claus Ludwig Engelbrecht**
**3060 Espergaerde (DK)**
• **BIRCH-RASMUSSEN, Soeren**
**2660 Stenloese (DK)**

(74) Representative: **Roerboel, Leif et al**
**Budde Schou A/S**
**Vester Søgade 10**
**1601 Copenhagen V (DK)**

(56) References cited:
**WO-A-82/03622     DE-A1- 19 633 879**
**GB-A- 2 068 098     JP-A- 3 043 201**
**JP-A- 7 010 657**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

A process for curing concrete is provided, in which the concrete is subjected to electromagnetic radiation. Operational parameters are disclosed that drastically reduces the curing time, without weakening the material strength of the cured concrete. Further, a process for curing reinforced concrete products is also provided, in which the curing and drying is accelerated through a multi-step procedure. In three individual steps, the cast concrete elements are subjected to an inductive alternating magnetic field, electromagnetic high-frequency radiation and electromagnetic microwave radiation in the said order. Any of the steps can take place in a low-pressure or vacuum environment, which removes air from the cast concrete and accelerates the drying.

BACKGROUND OF THE INVENTION (PRIOR ART)

The curing and drying of reinforced concrete is an old art dating back one and a half centuries. Concrete solidifies and hardens after mixing due to a chemical process known as hydration. The term "curing" refers to the period between the molding operation and the point when the hydration to a large extent is completed. In some situations the drying of concrete, i.e. the removal of excess water after curing, can be important. An example to this is when precast concrete must be dry before shipping. Generally, the drying is considered a part of the curing process.

The oldest method of curing concrete is to let it rest in natural atmospheric conditions. Additional water can be added if needed in the hydration process, usually by applying a sprinkler system to the surface of the concrete element. By this method the curing takes several weeks, which can be an inconvenience in the production of precast concrete elements.

The hydration process is exothermic and the hardening of the concrete depends on its temperature. Curing can be accelerated by supplying additional heat, usually by steam, heating coils or electrically heated forms or pads. Heating can also be achieved by applying different forms of electromagnetic radiation. At the shortest wavelengths, the concrete or an enclosing form is illuminated by infrared radiation, where the heat reaches the interior of the cast element through conduction from the surface. Microwave radiation can also be applied in the curing process, see U.S. patent no. 4,338,135 and US patent no. 5,245,149 for related examples. The temperature is then increased through direct dielectric heating of the concrete. This gives a deeper penetration of the applied energy. At the longest wavelengths, the concrete is subjected to high-frequency radio emission, which also increases the temperature through dielectric heating, but with a deeper penetration compared with that of microwave radiation. In U.S. patent no. 4,687,374 electromagnetic radiation of variable frequency is suggested for dielectric heating of cast tunnel lining elements.

For the case of concrete with electrically conducting metal reinforcements, these will act as antennas when the element is subjected to high-frequency radio emission. Eddy currents will form in the reinforcements, thereby heating the concrete element from within. This electromagnetic inductive heating is the most efficient if the reinforcements are ferromagnetic, which is the case for the more commonly used reinforcement steels.

Alternating magnetic fields can also be applied to induce eddy currents in the reinforcements. In contrast to the high-frequency radio, the magnetic field does not induce any dielectric heating. This means that magnetic inductive heating only works if reinforcements are present in the concrete, where the bars or fibres are of an electrically conducting material. As for electromagnetic inductive heating, the magnetic heating is the most efficient when the material also is ferromagnetic.

Vacuum drying where a product is subjected to dielectric heating is a known technique. As an example of a general application see U.S. patent no. 5,575,083. The vacuum lowers the boiling temperature, while the electromagnetic field increases the temperature, resulting in a more efficient drying. Regarding the production of concrete, vacuum has been applied when moulding to remove unwanted gas bubbles from the material before it solidifies, see U.S. patent no. 5,932,256 for an example. A vacuum system can also collect surplus mixing water, allowing it to be recycled.

WO-A-82/03622 discloses a method for accelerating the curing of concrete, wherein the wet concrete is subjected to heating by applying electromagnetic radiation during a short period in the range of seconds up to a few minutes, thereby increasing the temperature of said concrete from an initial first temperature within the range of approximately 10 to approximately 25 degrees C to a second temperature within the range of approximately 50 to approximately 80 degrees C, electromagnetic radiation having a frequency in the range of approximately 5 to approximately 35 MHZ. However, there is no mentioning of an electromagnetic radiation having a frequency in the range of approximately 5 to approximately 35 MHZ in combination with a frequency in the microwave range.

JP-A-07 010657 teaches a method for curing concrete wherein the curing is accelerated by irradiating the mixture with microwaves. Said document does however not disclose the combination of using electromagnetic radiation having a frequency in the range of 5 to 35 MHZ in combination with a frequency in the microwave range.

Moreover, DE-A1-196 33 879 discloses a method for the accelerated curing of concrete. However, in this document either dielectric heating or microwave irradiation is suggested. The document is furthermore silent about reducing the temperature gradient during curing within the concrete element.

However, there are problems with the known techniques, as the structural properties of the cured concrete can be negatively affected by being subjected to a heating through electromagnetic radiation.

OBJECTS OF THE INVENTION

An object according to the present invention is to provide a method according to claim 1 for accelerating the curing of wet concrete, without inducing any significant reduction of the strength of the cured concrete. A particular feature of the present invention is a set of constrained operational parameters that, at a highly accelerated curing, gives surprisingly good structural properties of the cured concrete. A particular advantage is that the present invention allows for a drastically reduced process time in the production of concrete elements and products.

SUMMARY/DISCLOSURE OF THE INVENTION

In addition to the above object, the above advantage and the above feature, numerous other objects, advantages and features will be evident from the detailed descriptions given below of preferred embodiments according to the present invention.

The objects, advantages and features are according to a first aspect of the present invention obtained by a method for accelerating the curing of concrete, wherein the wet concrete is subjected to heating by applying electromagnetic radiation during a short period in the range of seconds up to a few minutes. The temperature of the concrete is increased from an initial first temperature within the range of approximately 10 to approximately 25 degrees C to a second temperature within the range of approximately 50 to approximately 80 degrees C.

With the given short period over which the electromagnetic radiation is applied, combined with the a first and a second temperature within the given intervals, a highly accelerated curing of the wet concrete will be obtained, without any significant reduction of the structural strength of the cured concrete. Instead, an increase in the structural strength can be obtained, with fewer or none occurrences of cracks due to shrinkage in the continued curing. This may be explained by gas bubbles being formed or sustained within the concrete by the applied electromagnetic radiation. The gas bubbles in turn counteract the shrinkage by providing an increased internal pressure. Another explanation to the improved structural properties may be the even temperature that is induced throughout the concrete volume by the electromagnetic radiation. This is in clear contrast to other heating techniques supplying the heating to the surface of the concrete, e.g. by subjecting the concrete to a hot fluid. A surprisingly large reduction of the required curing and process time has also been obtained by the proposed method.

According to the invention, the electromagnetic radiation has a frequency in the range of approximately 5 to approximately 35 MHz. It has been shown that this gives surprisingly good structural properties, which may be explained by a particularly uniform heating of the concrete at frequencies in this range. In narrower frequency bands, the electromagnetic radiation may have a frequency in the range of approximately 10 to approximately 15 MHz, or alternatively of approximately 25 to approximately 30 MHz, giving an efficient heating of the concrete. Further, the electromagnetic radiation may have a frequency of approximately 13.56 MHz or approximately 27.12 MHz, at which the heating is surprisingly efficient.

The short period of applying the electromagnetic radiation may be in the range of approximately 0.5 to approximately 10 minutes. There are indications that this may improve the structural properties of the concrete, which may be explained by an optimal average size, or an optimal number, of the gas bubbles formed in the heating. In a narrower interval, the short period of applying the electromagnetic radiation may be in the range of approximately 3 to approximately 7 minutes. Further, the short period of applying the electromagnetic radiation may be approximately 5 minutes. There are indications that a period of approximately 5 minutes, or approximately 3 to approximately 7 minutes optimizes the structural properties of the cured concrete.

The first temperature may be in the range of approximately 15 to approximately 20 degrees C. There are indications that this interval of the first temperature has a positive effect on the structural properties of the cured concrete. Further, the first temperature may be approximately 18 degrees C, by which the resulting structural properties seem to be the best. The second temperature may be in the range of approximately 60 to approximately 70 degrees C. There are indications that this interval of the second temperature has a positive effect on the structural properties of the cured concrete. Further, the second temperature may be approximately 65 degrees C, by which the resulting structural properties seem to be the best. The positive effects may be explained by a creation of an optimal number and/or optimal size of the gas bubbles induced by the heating.

According to the invention, the electromagnetic radiation comprises a frequency in the microwave range. Here, a frequency in the microwave range is defined as being within the range 0.3 to 30 GHz. In particular, the microwave frequency may be approximately 0.9 GHz or approximately 2.45 GHz. Heating by frequencies in the microwave range will not penetrate as far into the wet concrete as the heating using frequencies in the 5 to 35 MHz range. This may be favourable for concrete forming a hollow or shell-like structure, where deep penetration into the concrete is not necessary. It may also be an advantage if heating from a particular direction is required, since the radiation in the microwave range is directional, in contrast to the radiation in the 5 to 35 MHz range.

The concrete may further comprise electrically conductive reinforcements. Alternatively or additionally to the abovementioned frequencies and frequency ranges, the electromagnetic radiation may then have a frequency suitable for inductive heating of the electrically conductive reinforcements. A frequency suitable for inductive heating is in the range 20 to 300 kHz, since then little energy is lost by dielectric heating of the wet concrete. Inductive heating may be favourable if a deep penetration of the heating is needed, or where heating of the volume close to the reinforcements is an advantage.

The wet concrete may be subjected to a stepwise heating by applying electromagnetic radiation having an initial frequency suitable for inductive heating, a subsequent frequency in the range of 5 to 35 MHz, and a final frequency in the microwave range. For reinforced concrete, with electrically conductive reinforcements located at the centre of a sufficiently large concrete volume, the initial frequency will provide a heating at the centre of the volume, the subsequent frequency will provide heating of the whole volume, and the final frequency will provide heating at the surface of the volume. By this, an efficient heating of large volumes of wet reinforced concrete can be achieved. Further, the final frequency in the microwave range may also evaporate excess water on the surface of the concrete, which in itself may be an advantage.

The initial frequency, the subsequent frequency, and/or the final frequency may be applied in a vacuum environment at a lower than atmospheric pressure. The vacuum environment may be provided by way of a vacuum chamber and a vacuum pump. The pressure inside the vacuum chamber may be in at least one of the ranges 20 to 60, 60 to 100, 100 to 300, 300 to 760, 20 to 100, 20 to 300, 20 to 760, 60 to 760, 100 to 760, and 60 to 300 torr, preferably in the range 100 to 760 torr. The lower than atmospheric pressure influences the structural properties by the growth of gas bubbles in the concrete. A lower pressure results in a larger growth of gas bubbles. The lower than atmospheric pressure can be optimized for different concrete volumes and mixtures. Further, he lower than atmospheric pressure may be used to remove excess water from the surface, or close to the surface, of a concrete volume.

The concrete may be a precast element, which is rotated when being subjected to electromagnetic radiation in the microwave band. The microwaves are directional and may not give a uniform heating of the concrete element, due to its limited ability to penetrate the concrete. The rotation will cause the electromagnetic radiation to reach a larger surface of the precast concrete element, thereby providing a more uniform heating.

After being subjected to heating, the concrete may be thermally insulated from the surroundings, thereby preserving the heat energy from the heating within the concrete. This may be an advantage, since a quick dissipation of the supplied energy may result in a weakening of the structural strength of the cured concrete.

Additional improvements of the structural properties may be obtained by regulating the maximum average curing temperature of the concrete after being subjected to electromagnetic radiation, the maximum average curing temperature being larger than the second temperature by an amount being in at least one of the ranges 0 to 5, 5 to 10, 10 to 15, 15 to 20, 0 to 10, 0 to 15, 5 to 15, 5 to 20, and 10 to 20 degrees C, preferably in the range 10 to 15 degrees C.

Further additional improvements of the structural properties may be obtained by subjecting the concrete to electromagnetic radiation so that the maximum temperature difference between two points of the concrete is in at least one of the ranges 0 to 2, 2 to 4, 4 to 8, or 8 to 12 degrees C.

One further aim of the present invention is to provide a new multi-step process for the curing and drying of cast concrete elements with electrically conducting reinforcements. In the individual steps the reinforced concrete is subjected to: [1] an alternating magnetic field, [2] high-frequency radio emission and [3] microwave radiation. In step [2] and [3] the concrete element may be placed inside a vacuum chamber. The steps are performed in the said order; however, one of them may be excluded from the process.

The advantage with this new process over prior art is that it provides a more efficient and uniform heating of cast reinforced concrete, thereby shortening the time needed for curing and drying, without any negative structural effects on the final product. The process can be optimized for different concrete properties - such as dimensions, water contents and reinforcement spacing - by varying the time and the applied power in each of the steps above. Further, the frequency of the induction fields in step [1] and [2], i.e. the magnetic and high frequency radio fields, can be varied to achieve a more favourable heating for curing and drying.

For the case of steel-bar reinforcements, these are usually placed close to the centre of a concrete element. The magnetic induction [1] will then heat the element from its centre. The high-frequency radio emission [2] will induce heating, both through electromagnetic induction in the reinforcements and by direct dielectric heating of the concrete. The former will heat the elements from its centre, while for the latter the heating is the strongest at the surface of the element. The microwave radiation [3] will induce dielectric heating that is the strongest close to the surface. Clearly, even though being a very inhomogeneous medium, the temperature of a steel-bar reinforced concrete element can be increased uniformly by the multi-step process suggested above.

For other kinds of reinforcements, such as small fibres, hooks and rings, that are evenly spread throughout the concrete and manufactured of an electrically conductive material, such as steel or carbon, the heating in step [1] and [2] can be distributed in a more uniform fashion, making one of the steps obsolete.

BRIEF DESCRIPTION OF THE DRAWINGS

Additional objects and features according to the present invention will be more readily apparent from the following detailed description and appended claims, where the former is presented in conjunction with the drawings:

Fig.1 illustrates a presently preferred embodiment of the proposed process for accelerating the curing of concrete;

Fig.2 illustrates how the temperature (in degrees C) of the concrete increases with the time (in minutes) it is irradiated by electromagnetic radiation;

Fig.3 illustrates how the compressive strength (in MPa) increases with the maturity (in hours) of the curing;

Fig.4 illustrates the dependence between the maturity (in hours) and the actual process time (in hours) for a range of different operating parameters for heating the wet concrete;

Fig.5 illustrates blown up portion of the graph in Fig.4, namely for a process time in the range 0 to 20 hours, and

Fig.6 illustrates how the temperature (in degrees C) of the concrete changes with the maturity (in hours) after it has been subjected to heating by using the same operating parameters as in Figs.3 and 4.

DETAILED DESCRIPTION OF THE INVENTION

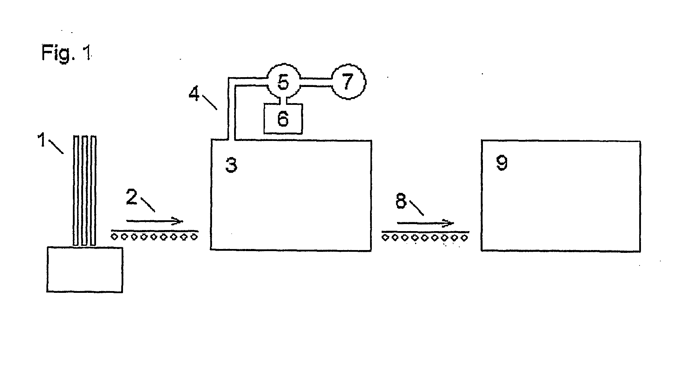

To give a more detailed explanation of the invention, a schematic illustration of the proposed process is given in Fig.1.

The first part in the multi-step process is an induction unit 1 with a variable output frequency and power. The unit 1 is equipped with a coil construction suitable for magnetic inductive heating, e.g. a helix surrounding the reinforced concrete elements. The frequency of the variable magnetic field is typically in the range 20 to 300 kHz. After the initial heating corresponding to step [1] above, a conveyor belt, a cart system or a similar arrangement 2 moves the concrete element further in the process.

The second part of the process is a high-frequency radio unit 3 with a variable output power and frequency, where the former is at least 30kW and the latter is typically in the range 3 to 30 MHz, or most preferably 13.56 MHz. The unit 3 has an antenna design and a configuration suitable for inductive and dielectric heating of the reinforced concrete elements. The antennas are placed inside a sealable airtight tank, where the heating of the concrete elements takes place. The purpose with the tank is twofold, namely to contain the radio emission and to provide the housing for a low-pressure environment.

A vacuum pump 7 lowers the pressure inside chamber 3 through a piping system 4. The moisture and air, which is discharged from the concrete elements inside 3, will be removed through the same piping system. To prevent the moisture from reaching the vacuum pump 7, a dryer 5 separates the water from the air. The water is then led from 5 to be collected in a container 6, from where it can be recycled. After the high-frequency radio heating and the vacuum treatment - corresponding to step [2] above - a conveyor belt, a cart system or a similar arrangement 8 moves the concrete elements to next step in the process.

The third part of the process is a microwave unit 9, which has a design suitable for the heating of cast concrete elements. An example to this can be a configuration where a set of magnetrons simultaneously illuminates a concrete block from several different directions. A typical frequency of the microwave radiation is in the range 0.3 to 30 GHz, most preferably 0.9 GHz or 2.45 GHz. The unit 9 is shielded so that no hazardous microwave radiation can escape to the surroundings. Heating in 9 corresponds to step [3] above.

In an alternative embodiment, all of the steps [1] to [3] are performed within the same vacuum chamber, where the vacuum chamber provides shielding against the electromagnetic radiation. The vacuum pump may be active during all of the steps [1] to [3], or alternatively during a single step, e.g. step [3].

Although the invention has been described as a process for accelerating the curing and drying of precast reinforced concrete elements, it is evident that it can be applied for the heating or drying of other products. It is also understood that the inductive heating in step [1] and [2] must not necessarily be applied through electrically conductive elements inside a product, such as the reinforcements inside concrete. The inductive heating can instead be applied through an electrically conductive material, e.g. a metal form, which is in contact with or in close proximity to the product.

Examples of other products for which the proposed process can be applied are wood, grain and bricks.

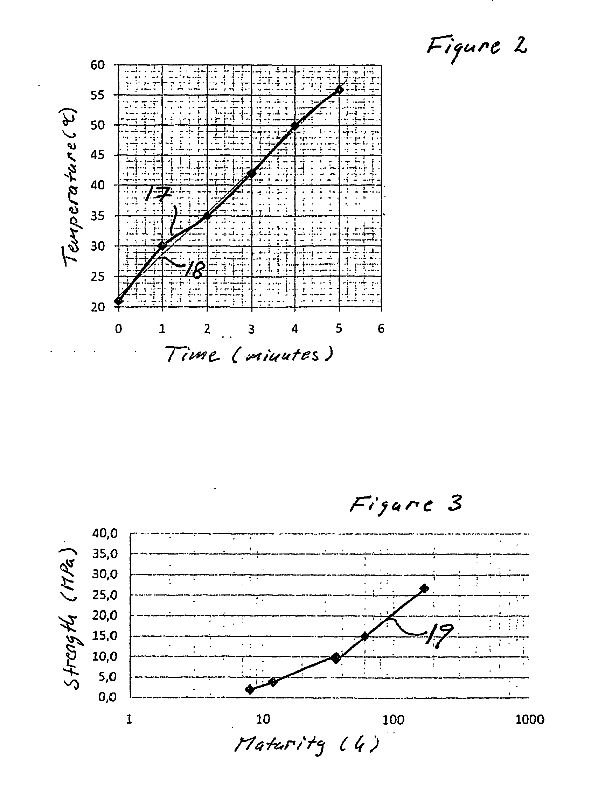

Figs.2 to 6 show graphs that are based on some of the experimental tests leading to the proposed method. The concrete used in these in these particular tests consisted of a relative mixture corresponding to 346 kg cement, 137 kg water, 6 kg plasticizer, 930 kg sand having a diameter spread of 0 to 4 mm, 385 kg sand having a diameter spread of 2 to 8 mm, 570 kg sand having a diameter spread of 8 to 16 mm. The wet concrete was cast into polypropylene tubes having a sheet thickness of 20 mm, a length of 200 mm, and a diameter of 110 mm. The tubes were split into two halves, enabling an easy removal and reuse of the tubes after curing. Upon casting, the wet concrete was compressed by using a rubber hammer. Immediately afterwards the concrete was heated by subjecting it to electromagnetic radiation having a frequency of 13.56 MHz,

A typical heating rate 17 is shown in Fig.2, where the temperature in degrees C is plotted as a function 17 of the heating time in minutes. The temperature increase follows a close to linear behaviour, i.e. the straight line 18 in the graph, which reflects the constant irradiated power from the high-frequency power supply.

The maturity of the concrete, i.e. the measure of how far the curing process has progressed after casting, depends on the temperature. An increase of the temperature generally leads to an increase of the maturity, which can be modelled as

$$M = H * t,$$

where t is the process time corresponding to the time that has progressed since the casting, H is a dimensionless temperature dependent curing-rate factor, and M is the maturity in the same unit as the process time t. The curing-rate factor can be modelled as

$$H(\theta) = \exp[\,E\,/\,R\,(1\,/\,293\,-\,1\,/\,(273 + \theta))],$$

where

$$E = 33500 \text{ J/mol for } \theta \geq 20 \text{ degrees C},$$
$$33500 + 1470(20 - \theta) \text{ J/mol for } \theta < 20 \text{ degrees C},$$

and R is the gas constant 8.314 J/mol/K. For this to be an applicable and realistic model, it is important that the curing is progressing with a sufficient amount of water and that the heat generated by the curing does not boil off water.

The heat energy that is released in the curing process results in a temperature increase of the concrete. The magnitude of the increase depends on the heat exchange with the surroundings. If a concrete element is insulated from the surroundings, it is possible to obtain a temperature increase between 20 to 40 degrees C. In the particular tests disclosed here, the concrete elements were put into insulating bags.

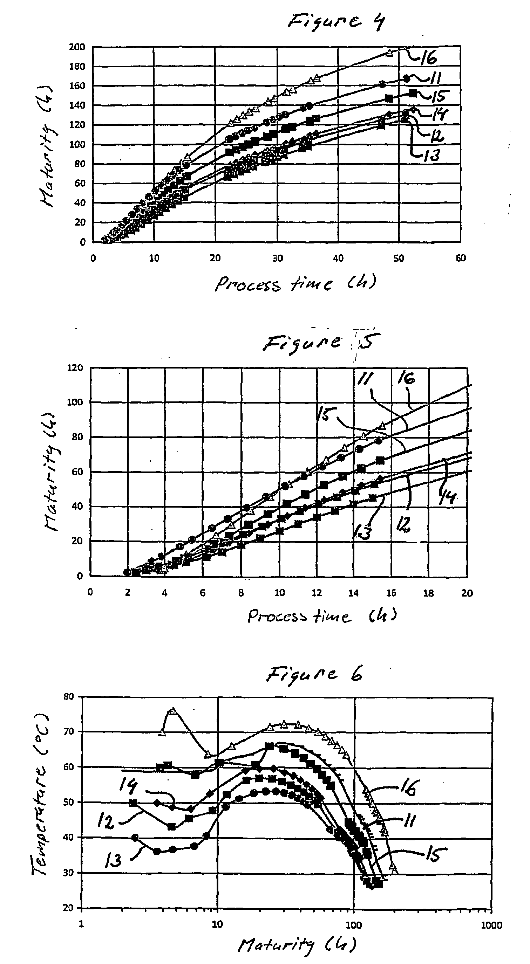

In Fig.3 the compressive strength in MPa is plotted as a function 19 of the maturity in hours. The maturity is depicted on a logarithmic scale to enhance the features of the strength development, which increases the most in the early parts of the curing process, i.e. for low values of the maturity. In Fig.4 the maturity in the unit of hours is plotted versus the process time in the same unit. The six depicted curves correspond to different irradiation times of the electromagnetic radiation, i.e. to different temperatures of the concrete immediately after the irradiation. The employed high-frequency generator had a power of 4kW, and the first irradiation 11 lasted 5 minutes and increased the temperature from 18 to 40 degrees C, the second irradiation 12 lasted 4 minutes and increased the temperature from 18 to 50 degrees C, the third irradiation 13 lasted 2.25 minutes and increased the temperature from 18 to 40 degrees C, the fourth irradiation 14 lasted 5 minutes and increased the temperature from 18 to 50 degrees C, the fifth irradiation 15 lasted 6 minutes and increased the temperature from 18 to 60 degrees C, the sixth irradiation 16 lasted 5 minutes and increased the temperature from 18 to 70 degrees C. In Fig.5 the same dataset as in Fig.4 is depicted, but for the narrower range 0 to 20 hours. In Fig.6 the temperature as a function of the maturity is shown for the six abovementioned irradiations. Most probably, the measurement of the temperature of the concrete element subjected to the first irradiation 11 was flawed due to a misplacing of the thermometer. Hence, the corresponding data points in Figs. 4 to 6 do not show the correct values and should be disregarded.

**Claims**

1. A method for accelerating the curing of concrete, wherein the wet concrete is subjected to heating by applying electromagnetic radiation during a short period in the range of seconds up to a few minutes, thereby increasing the temperature of said concrete from an initial first temperature within the range of approximately 10 to approximately 25 degrees C to a second temperature within the range of approximately 50 to approximately 80 degrees C, said electromagnetic radiation having a frequency in the range of approximately 5 to approximately 35 MHz in combination with a frequency in the microwave range.

2. A method according to claim 1, wherein said electromagnetic radiation has a frequency in the range of approximately 10 to approximately 15 MHz, or alternatively of approximately 25 to approximately 30 MHz.

3. A method according to any of the claims 1 to 2, wherein said electromagnetic radiation has a frequency of approximately 13.56 MHz or approximately 27.12 MHz.

4. A method according to any of the claims 1 to 3, wherein said short period of applying said electromagnetic radiation is in the range of approximately 0.5 to approximately 10 minutes.

5. A method according to any of the claims 1 to 4, wherein said short period of applying said electromagnetic radiation is in the range of approximately 3 to approximately 7 minutes.

6. A method according to any of the claims 1 to 5, wherein said short period of applying said electromagnetic radiation is approximately 5 minutes.

7. A method according to any of the claims 1 to 6, wherein said first temperature is in the range of approximately 15 to approximately 20 degrees C.

8. A method according to any of the claims 1 to 7, wherein said first temperature is approximately 18 degrees C.

9. A method according to any of the claims 1 to 8, wherein said second temperature is in the range of approximately 60 to approximately 70 degrees C.

10. A method according to any of the claims 1 to 9, wherein said second temperature is approximately 65 degrees C.

11. A method according to any of the claims 1 to 10 wherein said concrete further comprises electrically conductive reinforcements, said electromagnetic radiation additionally having a frequency suitable for inductive heating of said electrically conductive reinforcements.

12. A method according to any of the claims 1 to 11, wherein the wet concrete is subjected to a stepwise heating by applying electromagnetic radiation having an initial frequency according to claim 11, a subsequent frequency in the range of approximately 5 to approximately 35 MHz, and a final frequency in the microwave range.

13. A method according to claim 1, wherein said electromagnetic radiation having a frequency in the range of approximately 5 to approximately 35 MHz in combination with a frequency in the microwave rangeinitial frequency, is applied in a vacuum environment at a lower than atmospheric pressure.

14. A method according to any of the claims 1 to 13, wherein said concrete is a precast element, said precast element being rotated when being subjected to said microwave radiation.

15. A method according to any of the claims 1 to 14, wherein subsequent after being subjected to heating, said concrete is thermally insulated from the surroundings, thereby preserving the heat energy from said heating within said concrete.

**Patentansprüche**

1. Verfahren zur Beschleunigung der Aushärtung von Beton, bei welchem der nasse Beton durch die kurzzeitige Anwendung elektromagnetischer Strahlung in einem Zeitraum von Sekunden bis zu einigen Minuten erwärmt wird, wodurch die Temperatur des besagten Betons von einer ersten Anfangstemperatur im Bereich von etwa 10 bis etwa 25°C auf eine zweite Temperatur im Bereich von etwa 50 bis etwa 80°C erhöht wird, wobei die besagte elektromagnetische Strahlung eine Frequenz im Bereich von etwa 5 bis etwa 35 MHz in Kombination mit einer Frequenz im Mikrowellenbereich aufweist.

2. Verfahren gemäss Anspruch 1, bei welchem die besagte elektromagnetische Strahlung eine Frequenz im Bereich von etwa 10 bis etwa 15 MHz aufweist, oder alternativ von etwa 25 bis etwa 30 MHz.

3. Verfahren gemäss einem jeglichen der Ansprüche 1 bis 2, bei welchem die besagte elektromagnetische Strahlung eine Frequenz von etwa 13,56 MHz oder etwa 27,12 MHz aufweist.

4. Verfahren gemäss einem jeglichen der Ansprüche 1 bis 3, bei welchem der besagte kurze Anwendungszeitraum der besagten elektromagnetischen Strahlung im Bereich von etwa 0,5 bis etwa 10 Minuten liegt.

5. Verfahren gemäss einem jeglichen der Ansprüche 1 bis 4, bei welchem der besagte kurze Anwendungszeitraum der besagten elektromagnetischen Strahlung im Bereich von etwa 3 bis etwa 7 Minuten liegt.

6. Verfahren gemäss einem jeglichen der Ansprüche 1 bis 5, bei welchem der besagte kurze Anwendungszeitraum der besagten elektromagnetischen Strahlung etwa 5 Minuten beträgt.

7. Verfahren gemäss einem jeglichen der Ansprüche 1 bis 6, bei welchem die besagte erste Temperatur im Bereich von etwa 15 bis etwa 20°C liegt.

8. Verfahren gemäss einem jeglichen der Ansprüche 1 bis 7, bei welchem die besagte erste Temperatur etwa 18°C beträgt.

9. Verfahren gemäss einem jeglichen der Ansprüche 1 bis 8, bei welchem die besagte zweite Temperatur im Bereich von etwa 60 bis etwa 70°C liegt.

10. Verfahren gemäss einem jeglichen der Ansprüche 1 bis 9, bei welchem die besagte zweite Temperatur etwa 65°C beträgt.

11. Verfahren gemäss einem jeglichen der Ansprüche 1 bis 10, bei welchem der besagte Beton zusätzlich elektrisch leitende Verstärkungen umfasst, wobei die besagte elektromagnetische Strahlung ausserdem eine Frequenz aufweist, die zur induktiven Erwärmung der besagten elektrisch leitenden Verstärkungen geeignet ist.

12. Verfahren gemäss einem jeglichen der Ansprüche 1 bis 11, bei welchem der nasse Beton einer stufenweisen Erwärmung durch Anwendung elektromagnetischer Strahlung mit einer Anfangsfrequenz gemäss Anspruch 11 ausgesetzt wird, einer nachfolgenden Frequenz im Bereich von etwa 5 bis etwa 35 MHz, und einer Endfrequenz im Mikrowellenbereich.

13. Verfahren gemäss Anspruch 1, bei welchem die besagte elektromagnetische Strahlung, die eine Frequenz im Bereich von etwa 5 bis etwa 35 MHz in Kombination mit einer Frequenz im Mikrowellenbereich aufweist, in einem luftleeren Raum bei Unterdruck angewendet wird.

14. Verfahren gemäss einem jeglichen der Ansprüche 1 bis 13, bei welchem der besagte Beton ein Fertigteil ist, welches Fertigteil rotiert wird, wenn es der besagten Mikrowellenbestrahlung ausgesetzt wird.

15. Verfahren gemäss einem jeglichen der Ansprüche 1 bis 14, bei welchem der besagte Beton nach der Erwärmung thermisch von der Umgebung isoliert wird, wodurch die von der besagten Erwärmung stammende Wärmeenergie in dem besagten Beton erhalten bleibt.

## Revendications

1. Procédé pour l'accélération du durcissement de béton, où le béton humide est assujetti à du chauffage en appliquant de la radiation électromagnétique pendant une période courte dans une plage de secondes allant jusqu'à quelques minutes, augmentant ainsi la température dudit béton d'une première température initiale dans une plage d'environ 10 à environ 25 degrés C à une deuxième température dans la plage d'environ 50 à environ 80 degrés C, ladite radiation électromagnétique ayant une fréquence dans la plage d'environ 5 à environ 35 MHz en combinaison avec une fréquence dans la plage hyperfréquence.

2. Procédé selon la revendication 1, ladite radiation électromagnétique ayant une fréquence dans une plage d'environ 10 à environ 15 MHz, ou alternativement d'environ 25 à environ 30 MHz.

3. Procédé selon l'une quelconque des revendications 1 à 2, ladite radiation électromagnétique ayant une fréquence d'environ 13.56 MHz ou environ 27.12 MHz.

4. Procédé selon l'une quelconque des revendications 1 à 3, ladite courte période de temps d'application de ladite radiation électromagnétique se situant dans la plage d'environ 0.5 minute à environ 10 minutes.

5. Procédé selon l'une quelconque des revendications 1 à 4, ladite courte période de temps d'application de ladite radiation électromagnétique se situant dans la plage d'environ 3 à environ 7 minutes.

6. Procédé selon l'une quelconque des revendications 1 à 5, ladite courte période de temps d'application de ladite radiation électromagnétique étant d'environ 5 minutes.

7. Procédé selon l'une quelconque des revendications 1 à 6, ladite première température étant dans la plage d'environ 15 à environ 20 degrés C.

8. Procédé selon l'une quelconque des revendications 1 à 7, ladite première température étant environ 18 degrés C.

9. Procédé selon l'une quelconque des revendications 1 à 8, ladite deuxième température étant dans une plage d'environ 60 à environ 70 degrés C.

10. Procédé selon l'une quelconque des revendications 1 à 9, ladite deuxième température étant environ 65 degrés C.

11. Procédé selon l'une quelconque des revendications 1 à 10, ledit béton comprenant en outre des renforcements conducteurs électriques, ladite radiation électromagnétique ayant en plus une fréquence convenable pour le chauffage inductif des renforcements conducteurs électriques.

12. Procédé selon l'une quelconque des revendications 1 à 11, ledit béton humide étant assujetti à un chauffage échelonné en appliquant de la radiation électromagnétique ayant une fréquence initiale selon la revendication 11, une fréquence suivante dans une plage d'environ 5 à environ 35 MHz, et une fréquence finale dans la plage hyperfréquence.

13. Procédé selon la revendication 1, ladite radiation électromagnétique ayant une fréquence dans une plage d'environ 5 à environ 35 MHz en combinaison avec une fréquence dans la plage hyperfréquence, étant appliquée dans un environnement sous vide à une pression plus basse que la pression atmosphérique.

14. Procédé selon l'une quelconque des revendications 1 à 13, ledit béton étant un élément préfabriqué, ledit élément préfabriqué étant tourné lorsque assujetti à ladite radiation d'ondes d'hyperfréquence.

15. Procédé selon l'une quelconque des revendications 1 à 14, ledit béton étant assujetti à du chauffage et ensuite, ledit béton est isolé thermiquement du milieu extérieur, préservant ainsi l'énergie thermique dudit chauffage à l'intérieur dudit béton.

Fig. 1

Figure 2

Figure 3

Figure 4

Figure 5

Figure 6

**EP 2 197 641 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4338135 A
- US 5245149 A
- US 4687374 A
- US 5575083 A
- US 5932256 A
- WO 8203622 A
- JP 7010657 A
- DE 19633879 A1